# FASCICULE DE BREVET EUROPEEN

(11) **EP 4 339 104 B1**
(45) Date de publication et mention de la délivrance du brevet: **12.11.2025**
(21) Numéro de dépôt: 23196697.9
(22) Date de dépôt: 12.09.2023
(51) Int. Cl.: B64D 35/08, B64D 27/24

(54) **ENSEMBLE DE PROPULSION COMPRENANT UN SYSTÈME DE TRANSMISSION, PLUSIEURS MOTEURS ÉLECTRIQUES ET AU MOINS UN SYSTÈME D'ACCOUPLEMENT DÉPORTÉ, AÉRONEF COMPRENANT AU MOINS UN TEL ENSEMBLE DE PROPULSION**
ANTRIEBSANORDNUNG MIT EINEM GETRIEBE, MEHREREN ELEKTROMOTOREN UND MINDESTENS EINEM VERSETZTEN KUPPLUNGSSYSTEM, LUFTFAHRZEUG MIT MINDESTENS EINER SOLCHEN ANTRIEBSANORDNUNG
PROPULSION ASSEMBLY COMPRISING A TRANSMISSION SYSTEM, A PLURALITY OF ELECTRIC MOTORS AND AT LEAST ONE OFFSET COUPLING SYSTEM, AIRCRAFT COMPRISING AT LEAST ONE SUCH PROPULSION ASSEMBLY

(30) Priorité: 13.09.2022 FR 2209151
(43) Date de publication de la demande: 20.03.2024
(73) Titulaire: Airbus SAS, 31700 Blagnac (FR)
(72) Inventeur: ESCOFFIER, Adrien, 13725 MARIGNANE (FR); LAPEYRE, Jean-Victor, 13725 MARIGNANE (FR); DEVILLIERS, Georges, 13725 MARIGNANE (FR); PHILIPPE, Antoine, 13725 MARIGNANE (FR)
(74) Mandataire: Fantin, Laurent

(56) Documents cités:
- CN-A- 106 953 483
- US-A1- 2021 362 862
- US-A1- 2021 399 607
- US-A1- 2022 274 715

## Description

La présente demande se rapporte à un ensemble de propulsion comprenant un système de transmission, plusieurs moteurs électriques et au moins un système d'accouplement déporté ainsi qu'à un aéronef comprenant au moins un tel ensemble de propulsion.

Selon un mode de réalisation visible sur la figure 1, un aéronef 10 comprend un fuselage 12, au moins une voilure 14 reliée au fuselage 12 ainsi que des ensembles de propulsion 16 reliés à la voilure 14 et disposés de part et d'autre du fuselage 12. Comme illustré sur les figures 2 et 3, chaque ensemble de propulsion 16 comprend une hélice 18 qui présente un axe de rotation A18.

Pour la suite de la description, une direction longitudinale est parallèle à l'axe de rotation A18 de l'hélice 18. Les notions « avant » et « arrière » font référence au sens d'écoulement de l'air par rapport à l'aéronef en vol, l'air s'écoulant selon la direction longitudinale, de l'avant vers l'arrière.

Un ensemble de propulsion de type électrique comprend plusieurs moteurs électriques 20 ainsi qu'un système de transmission 22, comme une boîte de vitesse par exemple, configuré pour accoupler les moteurs électriques 20 à l'hélice 18.

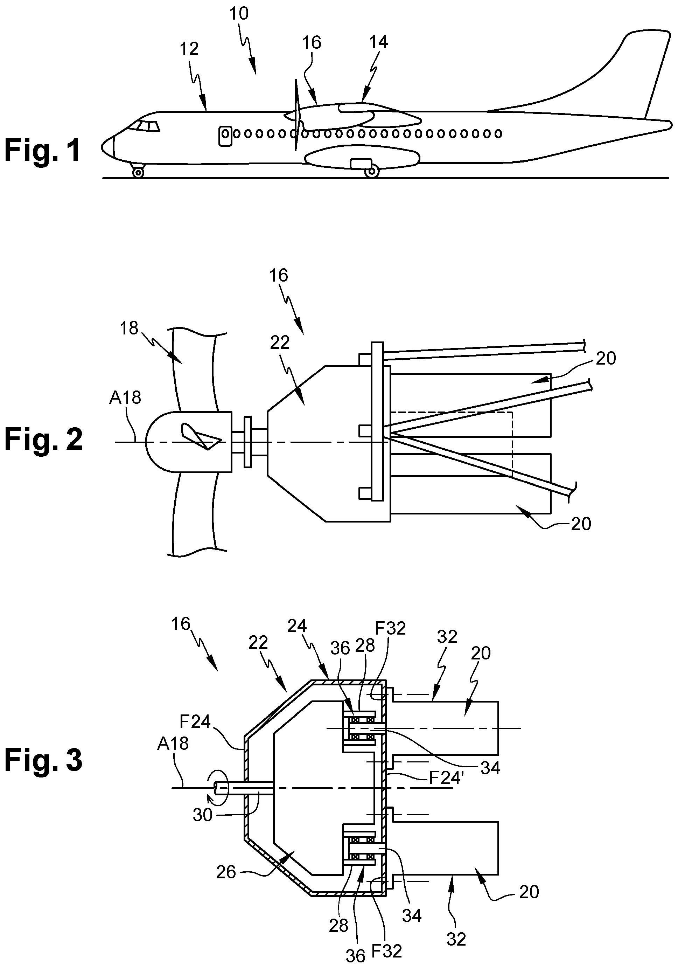

Comme illustré sur la figure 3, le système de transmission 22 comprend un premier boîtier 24 qui présente, selon la direction longitudinale, une paroi avant F24 orientée vers l'hélice 18 et une paroi arrière F24' sur laquelle sont fixés les moteurs électriques 20 ainsi qu'au moins une chaîne cinématique 26 positionnée dans le premier boîtier 24 qui présente au moins une entrée 28 pour chaque moteur électrique 20 et une sortie 30, sous la forme d'un arbre de sortie, traversant la paroi avant F24 pour être accouplée à l'hélice 18.

Chaque moteur électrique 20 présente un deuxième boîtier 32 qui comprend une face d'appui F32, fixée contre la paroi arrière F24' du premier boîtier 24, ainsi qu'un arbre de sortie 34, en saillie par rapport à la face d'appui F32, traversant la paroi arrière F24' du premier boîtier 24. Cet arbre de sortie 34 est accouplé avec l'une des entrées 28 de la chaîne cinématique 26 du système de transmission 22 par un système d'accouplement 36 positionné dans le premier boîtier 24 du système de transmission 22.

Selon un mode de réalisation, chaque système d'accouplement 36 comprend une roue libre configurée pour occuper un état accouplé dans lequel l'arbre de sortie 34 du moteur électrique 20 correspondant est accouplé en rotation et transmet un mouvement de rotation à la chaîne cinématique 26 du système de transmission 22 ainsi qu'un état désaccouplé, en cas d'incident par exemple, dans lequel l'arbre de sortie 34 du moteur électrique 20 correspondant n'est plus accouplé à la chaîne cinématique 26 du système de transmission 22 et ne lui transmet plus de mouvement de rotation.

De la sorte, si un moteur électrique 20 ne fonctionne plus et que son arbre de sortie 34 est bloqué en rotation, le système d'accouplement 36 permet de l'isoler de la chaîne cinématique 26 qui reste opérationnelle et transmet les mouvements de rotation des autres moteurs électriques 20 à l'hélice 18.

Les systèmes d'accouplement 36 nécessitent des opérations de maintenance plus fréquentes que les autres éléments du système de transmission 22. Pour chacune d'elles, le système de transmission 22 doit être déposé, ce qui implique de démonter les moteurs électriques 20, et son boîtier 24 doit être ouvert afin d'accéder aux systèmes d'accouplement 36. Ces différentes étapes sont relativement longues, fastidieuses et coûteuses.

Le document US2022/274715 divulgue un ensemble formé de trois moteurs électriques montés en série et entraînant une boîte à engrenages. Chaque moteur présente un arbre de sortie creux accouplé par un système d'accouplement de type roue libre à un premier arbre intermédiaire qui présente une première extrémité en saillie par rapport à une face amont du moteur ainsi qu'une deuxième extrémité accouplée par un système d'accouplement à un deuxième arbre intermédiaire qui s'étend en saillie par rapport à une face aval du moteur.

Pour chaque moteur, les deux systèmes d'accouplement entre les différents arbres sont positionnés entre les faces amont et aval du moteur rendant difficile l'accès.

Le document US2021/362862 divulgue deux moteurs électriques chacun traversé par un arbre (rotor) équipé de premier et deuxième systèmes d'accouplement de type roue libre montés à chaque extrémité, en sens inverse de telle façon qu'un seul système d'accouplement parmi les deux est « embrayé », selon le sens de rotation de l'arbre. Les premiers systèmes d'accouplement sont couplés mécaniquement à un arbre basse-pression et les deuxièmes systèmes d'accouplement sont couplés mécaniquement à un arbre haute-pression d'un moteur hybride. Selon le sens de rotation, un moteur électrique entraîne l'un ou l'autre de l'arbre basse-pression ou de l'arbre haute-pression. Toutefois, chaque système d'accouplement est situé entre le moteur électrique auquel il est couplé et l'arbre basse ou haute pression qu'il permet d'entraîner.

La présente invention vise à remédier à tout ou partie des inconvénients de l'art antérieur. A cet effet, l'invention a pour objet un ensemble de propulsion selon la revendication 1.

Le premier système d'accouplement étant déporté par rapport au système de transmission, il n'est plus nécessaire de déposer le système de transmission et de le démonter pour assurer une opération de maintenance du premier système d'accouplement. Le fait que le premier système d'accouplement ne soit pas situé dans le système de transmission permet également d'augmenter la durée entre deux opérations de maintenance du système de transmission.

Selon un autre avantage, le premier système d'accouplement est situé dans une zone plus accessible, ce qui facilite les opérations de maintenance et de contrôle dudit système d'accouplement.

Selon une autre caractéristique, l'ensemble de propulsion comprend un bouchon positionné au niveau de l'extrémité libre de l'arbre de sortie et relié par une liaison démontable à l'arbre de sortie.

Selon une autre caractéristique, l'arbre d'accouplement est creux.

Selon une autre caractéristique, le système de transmission comprend un trou logeant la deuxième extrémité de l'arbre d'accouplement. En complément, le deuxième système d'accouplement comprend des cannelures extérieures positionnées au niveau de la deuxième extrémité de l'arbre d'accouplement ainsi que des cannelures intérieures positionnées au niveau du trou et configurées pour coopérer avec les cannelures extérieures.

Selon une autre caractéristique, les cannelures intérieures solidaires du système de transmission, présentent des caractéristiques mécaniques supérieures à celles des cannelures extérieures, solidaires de l'arbre d'accouplement.

Selon une autre caractéristique, l'ensemble de propulsion comprend, pour chaque moteur électrique, un arbre d'accouplement ainsi que des premier et deuxième systèmes d'accouplement.

L'invention a également pour objet un aéronef comprenant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue schématique latérale d'un ensemble de propulsion électrique illustrant un mode de réalisation de l'art antérieur,
- La figure 3 est une coupe schématique d'un système de transmission et des moteurs électriques d'un ensemble de propulsion illustrant un mode de réalisation de l'art antérieur,

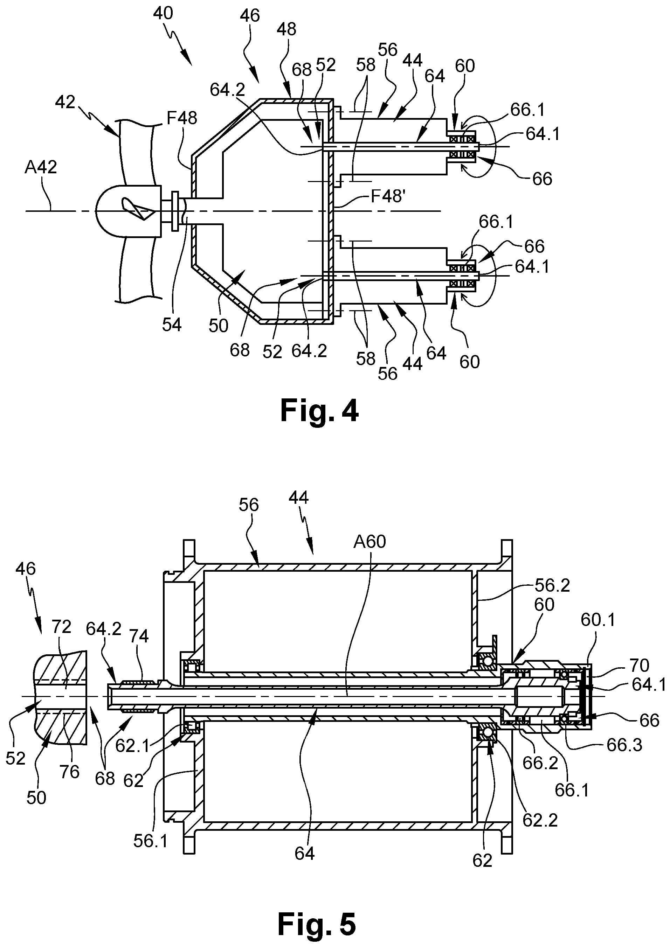

- La figure 4 est une coupe schématique d'un système de transmission et des moteurs électriques d'un ensemble de propulsion illustrant un mode de réalisation de l'invention,
- La figure 5 est une coupe schématique d'un moteur électrique d'un ensemble de propulsion illustrant un mode de réalisation de l'invention,

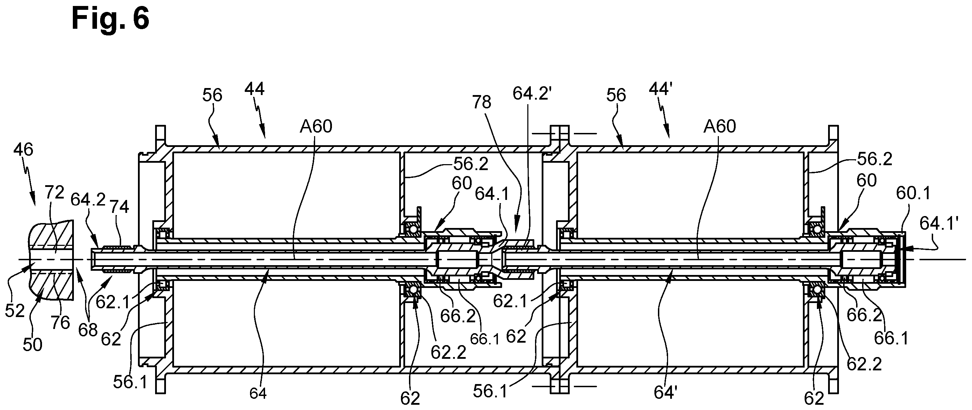

- La figure 6 est une coupe schématique de moteurs électriques d'un ensemble de propulsion illustrant un autre mode de réalisation de l'invention.

Selon un mode de réalisation visible sur la figure 4, un ensemble de propulsion 40 de type électrique comprend une hélice 42 qui présente un axe de rotation A42, plusieurs moteurs électriques 44 ainsi qu'un système de transmission 46, comme une boîte de vitesse par exemple, configuré pour accoupler les moteurs électriques 44 à l'hélice 42.

Selon une application, un aéronef comprend au moins un tel ensemble de propulsion 40. Bien entendu, l'invention n'est pas limitée à cette application. Quelle que soit l'application, l'ensemble de propulsion 40 de type électrique comprend un système de propulsion, comme une hélice par exemple, plusieurs moteurs électriques 44 ainsi qu'un système de transmission 46 configuré pour accoupler les moteurs électriques 44 au système de propulsion.

Selon une configuration visible sur la figure 4, le système de transmission 46 comprend un premier boîtier 48 qui présente, selon la direction longitudinale, une paroi avant F48 orientée vers le système de propulsion et une paroi arrière F48', sur laquelle sont fixés les moteurs électriques 44, ainsi qu'au moins une chaîne cinématique 50 positionnée dans le premier boîtier 48 qui présente au moins une entrée 52 pour chaque moteur électrique 44 et une sortie 54, sous la forme d'un arbre de sortie, traversant la paroi avant F48 pour être accouplée au système de propulsion.

Chaque moteur électrique 44 comprend un deuxième boîtier 56 qui présente une première face 56.1 orientée vers le système de transmission 46 ainsi qu'une deuxième face 56.2 opposée à la première face 56.1 et au système de transmission 46. L'ensemble de propulsion 40 comprend, pour chaque moteur électrique 44, des éléments de liaison 58 permettant de fixer le moteur électrique 44 sur le premier boîtier 48 du système de transmission 46. A titre d'exemple, les éléments de liaison 58 sont des vis, qui traversent des pattes solidaires du deuxième boîtier 56 du moteur électrique 44, se vissant chacune dans un trou taraudé solidaire du premier boîtier 48 du système de transmission 46. Bien entendu, l'invention n'est pas limitée à ce mode de réalisation pour les éléments de liaison 58. Quel que soit le mode de réalisation, chaque moteur électrique 44 est relié au système de transmission 46 par une liaison démontable.

Chaque moteur électrique 44 comprend un arbre de sortie 60, présentant un axe de pivotement A60, relié au deuxième boîtier 56 par une liaison pivotante 62.

Selon un agencement, l'axe de pivotement A60 de l'arbre de sortie 60 est sensiblement parallèle à la direction longitudinale. Les première et deuxième faces 56.1, 56.2 sont sensiblement perpendiculaires à l'axe de pivotement A60 et décalées l'une par rapport à l'autre selon la direction longitudinale.

Selon une configuration, l'arbre de sortie 60 s'étend de la première face 56.1 jusqu'à la deuxième face 56.2 et traverse les première et deuxième faces 56.1, 56.2, la liaison pivotante 62 comprenant un premier guidage en rotation 62.1, comme un roulement par exemple, intercalé entre une paroi du deuxième boîtier 56 située au niveau de la première face 56.1 et l'arbre de sortie 60 ainsi qu'un deuxième guidage en rotation 62.2, comme un roulement par exemple, intercalé entre une paroi du deuxième boîtier 56 située au niveau de la deuxième face 56.2 et l'arbre de sortie 60.

Pour au moins un moteur électrique 44, l'arbre de sortie 60 est positionné au niveau de la deuxième face 56.2, opposée au système de transmission 46. Selon un mode de réalisation, chaque moteur électrique 44 relié au système de transmission 46 comprend un arbre de sortie 60 positionné au niveau de la deuxième face 56.2 du deuxième boîtier 56, opposée au système de transmission 46.

Pour au moins un des moteurs électriques 44 présentant un arbre de sortie 60 positionné au niveau de la deuxième face 56.2, l'ensemble de propulsion 40 comprend :
- au moins un arbre d'accouplement 64, reliant l'arbre de sortie 60 du moteur électrique 44 et le système de transmission 46, qui présente des première et deuxième extrémités 64.1, 64.2,
- un premier système d'accouplement 66 configuré pour accoupler en rotation la première extrémité 64.1 de l'arbre d'accouplement 64 et l'arbre de sortie 60 du moteur électrique 44,
- un deuxième système d'accouplement 68 configuré pour accoupler en rotation la deuxième extrémité 64.2 de l'arbre d'accouplement 64 et le système de transmission 46.

Selon une configuration, l'ensemble de propulsion 40 comprend un arbre d'accouplement 64 ainsi que des premier et deuxième systèmes d'accouplement 66, 68 pour chaque moteur électrique 44.

Le premier système d'accouplement 66 est configuré pour occuper un état accouplé dans lequel l'arbre de sortie 60 du moteur électrique 44 est accouplé en rotation et transmet un mouvement de rotation au système de transmission 46 via l'arbre d'accouplement 64 ainsi qu'un état désaccouplé, en cas d'incident par exemple, dans lequel l'arbre de sortie 60 du moteur électrique 44 n'est plus accouplé à l'arbre d'accouplement 64 (et donc au système de transmission 46) et ne lui transmet plus de mouvement de rotation. Le premier système d'accouplement 66 passe de l'état accouplé à l'état désaccouplé, en cas d'incident par exemple, dès qu'un couple transmis via le premier système d'accouplement 66 dépasse un seuil donné ou n'est plus dans une plage donnée.

De la sorte, si le moteur électrique 20 accouplé à l'arbre d'accouplement 64 par le premier système d'accouplement 66 ne fonctionne plus et que son arbre de sortie 60 est bloqué en rotation, le premier système d'accouplement 66 permet de l'isoler de l'arbre d'accouplement 64 et donc du système de transmission 46 qui reste opérationnel et transmet les mouvements de rotation des autres moteurs électriques au système de propulsion.

De plus, le premier système d'accouplement 66 étant positionné à l'extérieur du système de transmission 46, il n'est plus nécessaire de déposer le système de transmission 46 et de le démonter pour assurer une opération de maintenance du premier système d'accouplement 66, ce qui permet d'augmenter la durée entre deux opérations de maintenance du système de transmission 46.

Pour obtenir un ensemble plus compact, pour au moins un moteur électrique 44, l'arbre de sortie 60 est creux et l'arbre d'accouplement 64 est logé dans l'arbre de sortie 60 creux. Selon un agencement, l'arbre d'accouplement 64 et l'arbre de sortie 60 sont coaxiaux.

Selon un mode de réalisation, le premier système d'accouplement 66 comprend une roue libre 66.1 configurée pour occuper un état accouplé en rotation dans lequel l'arbre de sortie 60 creux du moteur électrique 44 est accouplé en rotation et transmet un mouvement de rotation à l'arbre d'accouplement 64 ainsi qu'un état désaccouplé, en cas d'incident par exemple, dans lequel l'arbre de sortie 60 creux du moteur électrique 44 n'est plus accouplé en rotation à l'arbre d'accouplement 64 et ne lui transmet plus de mouvement de rotation.

Selon une configuration, le premier système d'accouplement 66 comprend des premier et deuxième guidages en rotation 66.2, 66.3 positionnés de part et d'autre de la roue libre 66.1. Cette dernière comprend une bague présentant une surface intérieure qui coopère avec l'arbre d'accouplement 64 ainsi qu'une surface extérieure qui coopère avec l'arbre de sortie 60, au moins l'une des surfaces parmi les surfaces intérieure et extérieure étant accouplée par friction avec l'arbre d'accouplement 64 ou l'arbre de sortie 60.

La roue libre 66.1 étant située à l'extérieur du premier boîtier 48 du système de transmission 46, les éventuelles poussières générées par l'accouplement par friction de la roue libre 66.1 ne polluent pas l'intérieur du système de transmission 46, limitant ainsi les risques de dégradation prématurée des composants du système de transmission 46.

Selon un agencement, le premier système d'accouplement 66 est positionné à l'intérieur de l'arbre de sortie 60, ce qui permet de le protéger.

L'arbre de sortie 60 présente une extrémité libre 60.1 en saillie par rapport à la deuxième face 56.2 et distante de la deuxième face 56.2. En complément, le premier système d'accouplement 66 est positionné, dans la portion de l'arbre de sortie 60 en saillie par rapport à la deuxième face 56.2, à proximité de son extrémité libre 60.1. Ainsi, le premier système d'accouplement 66 est accessible depuis l'extrémité libre 60.1 de l'arbre de sortie 60 et il n'est pas nécessaire de démonter le moteur électrique 44 pour assurer la maintenance ou le contrôle du premier système d'accouplement 66. Le premier système d'accouplement 66 étant positionné à l'extérieur du moteur électrique 44 et à proximité de la deuxième face 56.2 qui est une zone relativement accessible, les opérations de maintenance ou de contrôle du premier système d'accouplement 66 sont simplifiées.

Selon un mode de réalisation, l'ensemble de propulsion comprend un bouchon 70 positionné au niveau de l'extrémité libre 60.1 de l'arbre de sortie 60, relié par une liaison démontable à l'arbre de sortie 60 et configuré pour obturer l'extrémité libre 60.1 de l'arbre de sortie 60. Ce mode de réalisation permet de renforcer la protection du premier système d'accouplement 66.

Selon une configuration, l'arbre d'accouplement 64 est creux pour réduire sa masse.

Selon un mode de réalisation, le deuxième système d'accouplement 68 est configuré pour relier la deuxième extrémité 64.2 de l'arbre d'accouplement 64 et une des entrées 52 de la chaîne cinématique 50 du système de transmission 46 qui comprend un trou 72 configuré pour recevoir la deuxième extrémité 64.2 de l'arbre d'accouplement 64. Selon un agencement, le deuxième système d'accouplement 68 est positionné dans le premier boîtier 48.

Selon une configuration, le deuxième système d'accouplement 68 comprend des cannelures extérieures 74 positionnées au niveau de la deuxième extrémité 64.2 de l'arbre d'accouplement 64 ainsi que des cannelures intérieures 76, positionnées au niveau du trou 72, configurées pour coopérer avec les cannelures extérieures 74.

Selon cette configuration, les cannelures extérieures et intérieures 74, 76 sont configurées pour permettre d'accoupler en rotation l'arbre d'accouplement 64 et le système de transmission 46. Ce mode de réalisation permet d'introduire par translation la deuxième extrémité 64.2 de l'arbre d'accouplement 64 dans le trou 72 de l'entrée 52 du système de transmission 46.

Ainsi, l'arbre d'accouplement 64 et la roue libre 66.1 peuvent être extraits depuis l'extrémité libre 60.1 de l'arbre de sortie 60 sans avoir besoin de démonter le moteur électrique 44, ce qui contribue à simplifier la maintenance ou le contrôle de la roue libre 66.1 et l'arbre d'accouplement 64.

Bien entendu, l'invention n'est pas limitée à ce mode de réalisation pour le deuxième système d'accouplement 68. De préférence, ce dernier comprend une liaison glissière orientée selon la direction longitudinale permettant d'introduire par translation la deuxième extrémité 64.2 de l'arbre d'accouplement 64 dans le trou 72 de l'entrée 52 du système de transmission 46 ainsi qu'un système de blocage en rotation autour de l'axe de pivotement de l'arbre d'accouplement 64.

Selon une configuration, les cannelures intérieures 76, solidaires du système de transmission 46, présentent des caractéristiques mécaniques supérieures à celles des cannelures extérieures 74, solidaires de l'arbre d'accouplement 64. Cette configuration permet de limiter les risques d'endommagement des cannelures intérieures 76 de l'entrée 52 du système de transmission 46, ce qui contribue à augmenter la durée entre deux opérations de maintenance du système de transmission 46.

Selon un autre mode de réalisation visible sur la figure 6, l'ensemble de propulsion 40 comprend plusieurs moteurs électriques 44, 44' accouplés à une même entrée 52 du système de transmission 46. Selon une configuration, l'ensemble de propulsion 40 comprend des premier et deuxième moteurs électriques 44, 44', le premier moteur électrique 44 étant intercalé entre le deuxième moteur électrique 44' et le système de transmission 46. Les premier et deuxième moteurs électriques 44, 44' sont sensiblement identiques à celui décrit sur la figure 5, les boîtiers 56 des moteurs électriques 44, 44' étant reliés entre eux.

Pour les premier et deuxième moteurs électriques 44, 44', l'ensemble de propulsion 40 comprend des premier et deuxième arbres d'accouplement 64, 64'.

Le premier arbre d'accouplement 64 relie l'arbre de sortie 60 du premier moteur électrique 44 et le système de transmission 46, sa première extrémité 64.1 étant configurée pour pouvoir être accouplée en rotation par un premier système d'accouplement 66 à l'arbre de sortie 60 du premier moteur électrique 44, sa deuxième extrémité 64.2 étant configurée pour être accouplée en rotation par un deuxième système d'accouplement 68 au système de transmission 46.

Le deuxième arbre d'accouplement 64' relie l'arbre de sortie 60 du deuxième moteur électrique 44' et le premier arbre d'accouplement 64 prévu pour le premier moteur électrique 44, sa première extrémité 64.1' étant configurée pour pouvoir être accouplée en rotation par un premier système d'accouplement 66 à l'arbre de sortie 60 du deuxième moteur électrique 44', sa deuxième extrémité 64.2' étant configurée pour être accouplée en rotation à la première extrémité 64.1 du premier arbre d'accouplement 64.

Selon ce mode de réalisation, l'ensemble de propulsion 40 comprend un troisième système d'accouplement 78 configuré pour accoupler en rotation la deuxième extrémité 64.2' du deuxième arbre d'accouplement 64' et la première extrémité 64.1 du premier arbre d'accouplement 64.

Selon une configuration, le troisième système d'accouplement 78 est sensiblement identique au deuxième système d'accouplement 68. Ainsi, la première extrémité 64.1 du premier arbre d'accouplement 64 comprend un logement configuré pour recevoir au moins partiellement la deuxième extrémité 64.2' du deuxième arbre d'accouplement 64', ledit logement étant cylindrique et pourvu de cannelures intérieures. En complément, la deuxième extrémité 64.2' du deuxième arbre d'accouplement 64' comprend des cannelures extérieures configurées pour coopérer avec les cannelures intérieures du logement prévu au niveau de la première extrémité 64.1 du premier arbre d'accouplement 64.

L'ensemble de propulsion 40 peut comprendre plus de deux moteurs électriques, les arbres d'accouplement 64, 64' prévus pour les différents moteurs électriques 44, 44' étant accouplés entre eux, l'un d'eux étant accouplé à une première entrée 52 du système de transmission 46. Le mode de réalisation visible sur la figure 6 permet de pouvoir monter en série plusieurs moteurs électriques 44, 44' et d'augmenter la puissance de l'ensemble de propulsion 40. Comme pour le mode de réalisation visible sur la figure 5, il n'est pas nécessaire de déposer le système de transmission et de le démonter pour assurer une opération de maintenance sur le premier système d'accouplement 66 du moteur électrique 44.

## Revendications

1. Ensemble de propulsion comportant un système de propulsion, des moteurs électriques (44) ainsi qu'un système de transmission (46) configuré pour accoupler les moteurs électriques (44) au système de propulsion, chaque moteur électrique (44) comportant une première face (56.1) orientée vers le système de transmission (46), une deuxième face (56.2) opposée au système de transmission (46) ainsi qu'un arbre de sortie (60), l'ensemble de propulsion comportant, pour au moins un moteur électrique (44), un premier système d'accouplement (66) configuré pour occuper un état accouplé dans lequel l'arbre de sortie (60) du moteur électrique (44) est accouplé en rotation au système de transmission (46) ainsi qu'un état désaccouplé dans lequel l'arbre de sortie (60) du moteur électrique (44) n'est pas accouplé au système de transmission (46) ; dans lequel l'arbre de sortie (60) et le premier système d'accouplement (66) sont positionnés au niveau de la deuxième face (56.2) du moteur électrique (44), l'arbre de sortie (60) présentant une extrémité libre (60.1) en saillie par rapport à la deuxième face (56.2) et distante de la deuxième face (56.2), le premier système d'accouplement (66) étant positionné dans une portion de l'arbre de sortie (60) en saillie par rapport à la deuxième face (56.2), à proximité de son extrémité libre (60.1), dans lequel l'ensemble de propulsion comprend au moins un arbre d'accouplement (64), reliant l'arbre de sortie (60) du moteur électrique (44) et le système de transmission (46), qui présente une première extrémité (64.1) prévue pour être accouplée en rotation à l'arbre de sortie (60) par le premier système d'accouplement (66) ainsi qu'une deuxième extrémité (64.2) accouplée en rotation au système de transmission (46) par un deuxième système d'accouplement (68), et dans lequel l'arbre de sortie (60) est creux et s'étend de la première face (56.1) jusqu'à la deuxième face (56.2), l'arbre d'accouplement (64) étant logé dans l'arbre de sortie (60) creux.

2. Ensemble de propulsion selon l'une des revendications précédentes,
dans lequel l'ensemble de propulsion comprend un bouchon (70) positionné au niveau de l'extrémité libre (60.1) de l'arbre de sortie (60) et relié par une liaison démontable à l'arbre de sortie (60).

3. Ensemble de propulsion selon l'une des revendications précédentes, dans lequel l'arbre d'accouplement (64) est creux.

4. Ensemble de propulsion selon l'une des revendications précédentes, dans lequel le système de transmission (46) comprend un trou (72) logeant la deuxième extrémité (64.2) de l'arbre d'accouplement (64) et dans lequel le deuxième système d'accouplement (68) comprend des cannelures extérieures (74) positionnées au niveau de la deuxième extrémité (64.2) de l'arbre d'accouplement (64) ainsi que des cannelures intérieures (76) positionnées au niveau du trou (72) et configurées pour coopérer avec les cannelures extérieures (74).

5. Ensemble de propulsion selon la revendication précédente, dans lequel les cannelures intérieures (76), solidaires du système de transmission (46), présentent des caractéristiques mécaniques supérieures à celles des cannelures extérieures (74), solidaires de l'arbre d'accouplement (64).

6. Ensemble de propulsion selon l'une des revendications précédentes, dans lequel l'ensemble de propulsion comprend, pour chaque moteur électrique (44), un arbre d'accouplement (64) ainsi que des premier et deuxième systèmes d'accouplement (66, 68).

7. Aéronef comprenant au moins un ensemble de propulsion selon l'une des revendications précédentes.

## Patentansprüche

1. Antriebseinheit mit einem Antriebssystem, Elektromotoren (44) sowie einem Übertragungssystem (46), das zur Kopplung der Elektromotoren (44) mit dem Antriebssystem eingerichtet ist, wobei jeder Elektromotor (44) eine dem Übertragungssystem (46) zugewandte erste Seite (56.1), eine dem Übertragungssystem (46) abgewandte zweite Seite (56.2) sowie eine Abtriebswelle (60) aufweist und wobei die Antriebseinheit für wenigstens einen Elektromotor (44) ein erstes Kupplungssystem (66) umfasst, das so eingerichtet ist, dass es einen gekoppelten Zustand einnimmt, in dem die Abtriebswelle (60) des Elektromotors (44) drehbar mit dem Übertragungssystem (46) gekoppelt ist, sowie eine entkoppelten Zustand einnimmt, in dem die Abtriebswelle (60) des Elektromotors (44) nicht mit dem Übertragungssystem (46) gekoppelt ist, wobei die Abtriebswelle (60) und das erste Kupplungssystem (66) an der zweiten Seite (56.2) des Elektromotors (44) angeordnet sind und wobei die Abtriebswelle (60) ein freies Ende (60.1) aufweist, das in Bezug auf die zweite Seite (56.2) vorsteht und von der zweiten Seite (56.2) beabstandet ist, wobei das erste Kupplungssystem (66) in einem Abschnitt der Abtriebswelle (60), der in Bezug auf die zweite Seite (56.2) vorsteht, in der Nähe ihres freien Endes (60.1) angeordnet ist, wobei die Antriebseinheit wenigstens eine Kupplungswelle (64) aufweist, die die Abtriebswelle (60) des Elektromotors (44) und das Übertragungssystem (46) verbindet, die ein erstes Ende (64.1) aufweist, das dazu vorgesehen ist, über das erste Kupplungssystem (66) drehbar mit der Abtriebswelle (60) gekoppelt zu werden, sowie ein zweites Ende (64.2), das durch ein zweites Kupplungssystem (68) drehbar mit dem Übertragungssystem (46) gekoppelt ist, und wobei die Abtriebswelle (60) hohl ist und sich von der ersten Seite (56.1) zur zweiten Seite (56.2) erstreckt, wobei sich die Kupplungswelle (64) in der hohlen Abtriebswelle (60) befindet.

2. Antriebseinheit nach einem der vorhergehenden Ansprüche, bei der die Antriebseinheit eine Abdeckung (70) umfasst, die am freien Ende (60.1) der Abtriebswelle (60) angeordnet ist und durch eine lösbare Verbindung mit der Abtriebswelle (60) verbunden ist.

3. Antriebseinheit nach einem der vorhergehenden Ansprüche, bei der die Kupplungswelle (64) hohl ist.

4. Antriebseinheit nach einem der vorhergehenden Ansprüche, bei der das Übertragungssystem (46) ein Loch (72) aufweist, das das zweite Ende (64.2) der Kupplungswelle (64) aufnimmt, und bei der das zweite Kupplungssystem (68) äußere Riffel (74), die an dem zweiten Ende (64.2) der Kupplungswelle (64) angeordnet sind, sowie innere Riffel (76) umfasst, die an dem Loch (72) angeordnet sind und so eingerichtet sind, dass sie mit den äußeren Riffeln (74) zusammenwirken.

5. Antriebseinheit nach dem vorhergehenden Anspruch, bei der die inneren Riffeln (76), die fest mit dem Übertragungssystem (46) verbunden sind, bessere mechanische Eigenschaften aufweisen als die äußeren Riffeln (74), die fest mit der Kupplungswelle (64) verbunden sind.

6. Antriebseinheit nach einem der vorhergehenden Ansprüche, bei der die Antriebseinheit für jeden Elektromotor (44) eine Kupplungswelle (64) sowie ein erstes und ein zweites Kupplungssystem (66, 68) umfasst.

7. Luftfahrzeug mit wenigstens einer Antriebseinheit nach einem der vorhergehenden Ansprüche.

## Claims

1. Propulsion assembly comprising a propulsion system, electric motors (44) and a transmission system (46) that is configured to couple the electric motors (44) to the propulsion system, each electric motor (44) comprising a first face (56.1) oriented toward the transmission system (46), a second face (56.2) facing away from the transmission system (46) and an output shaft (60), the propulsion assembly comprising, for at least one electric motor (44), a first coupling system (66) that is configured to assume a coupled state in which the output shaft (60) of the electric motor (44) is rotationally coupled to the transmission system (46) and an uncoupled state in which the output shaft (60) of the electric motor (44) is not coupled to the transmission system (46); wherein the output shaft (60) and the first coupling system (66) are located at the second face (56.2) of the electric motor (44), the output shaft (60) having a free end (60.1) projecting relative to the second face (56.2) and distant from the second face (56.2), the first coupling system (66) being located in a part of the output shaft (60) projecting relative to the second face (56.2), in the vicinity of the free end (60.1), wherein the propulsion assembly comprises at least one coupling shaft (64), which connects the output shaft (60) of the electric motor (44) and the transmission system (46), and has a first end (64.1) that is intended to be rotationally coupled to the output shaft (60) by way of the first coupling system (66) and a second end (64.2) that is rotationally coupled to the transmission system (46) by way of a second coupling system (68), and wherein the output shaft (60) is hollow and extends from the first face (56.1) to the second face (56.2), the coupling shaft (64) being housed in the hollow output shaft (60).

2. Propulsion assembly as claimed in the preceding claim, wherein the propulsion assembly comprises a cover (70) located at the free end (60.1) of the output shaft (60) and connected to the output shaft (60) by way of a removable connection.

3. Propulsion assembly as claimed in one of the preceding claims, wherein the coupling shaft (64) is hollow.

4. Propulsion assembly as claimed in one of the preceding claims, wherein the transmission system (46) comprises a hole (72) housing the second end (64.2) of the coupling shaft (64) and wherein the second coupling system (68) comprises external splines (74) located at the second end (64.2) of the coupling shaft (64) and internal splines (76) located in the hole (72) and configured to engage with the external splines (74).

5. Propulsion assembly as claimed in the preceding claim, wherein the internal splines (76), which are secured to the transmission system (46), have mechanical properties that are superior to those of the external splines (74), which are secured to the coupling shaft (64).

6. Propulsion assembly as claimed in one of the preceding claims, wherein the propulsion assembly comprises, for each electric motor (44), a coupling shaft (64) and first and second coupling systems (66, 68).

7. Aircraft comprising at least one propulsion assembly as claimed in one of the preceding claims.
